(19) Europäisches Patentamt / European Patent Office / Office européen des brevets

(11) **EP 2 584 217 A1**

(12) **EUROPEAN PATENT APPLICATION**
published in accordance with Art. 153(4) EPC

(43) Date of publication:
**24.04.2013 Bulletin 2013/17**

(51) Int Cl.:
*F16G 1/08* (2006.01)          *F16G 5/06* (2006.01)

(21) Application number: **11795494.1**

(22) Date of filing: **17.05.2011**

(86) International application number:
**PCT/JP2011/061260**

(87) International publication number:
**WO 2011/158586 (22.12.2011 Gazette 2011/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2010 JP 2010136069**

(71) Applicant: **Bando Chemical Industries, Ltd.**
**Kobe-shi, Hyogo 650-0047 (JP)**

(72) Inventors:
• **YAMADA, Tomoyuki**
**Kobe-shi**
**Hyogo 650-0047 (JP)**
• **TACHIBANA, Hiroyuki**
**Kobe-shi**
**Hyogo 650-0047 (JP)**
• **NAKAMURA, Tomonari**
**Kobe-shi**
**Hyogo 650-0047 (JP)**
• **NOGUCHI, Tadahiko**
**Kobe-shi**
**Hyogo 650-0047 (JP)**

(74) Representative: **Isarpatent**
**Patent- und Rechtsanwälte**
**Postfach 44 01 51**
**80750 München (DE)**

(54) **TRANSMISSION BELT**

(57)     An object of the present invention is to provide an environmentally-friendly transmission belt. Provided is a transmission belt formed of a crosslinked rubber, wherein 80% by mass or more of the transmission belt comprises non-petroleum resources, and a base rubber of the crosslinked rubber is a natural rubber.

# FIG. 1

EP 2 584 217 A1

Printed by Jouve, 75001 PARIS (FR)

**Description**

TECHNICAL FIELD

The present invention relates to a transmission belt, specifically to a transmission belt formed of a crosslinked rubber.

BACKGROUND ART

Conventionally, various transmission belts such as a V belt, a V-ribbed belt, a flat belt, a round belt, and a toothed belt have been widely used for transmitting power applications.
As this type of transmission belts, those formed from a resin composition based on a polyurethane resin or the like and those formed from a rubber composition based on ethylene-$\alpha$-olefin rubber, chloroprene rubber, or the like are known, and they are properly used depending on the characteristics of each material.

Note that the transmission belt is formed of various materials other than a crosslinked rubber made from any of the above rubber compositions; for example, a common V belt made of rubber comprises a core wire and a canvas, which are respectively formed of a steel cord and a multifilament yarn, and the like.

Incidentally, a measure for reducing the environmental load has been taken in recent years; for example, also for the transmission belt, a measure has been taken for suppressing the generation of environmentally harmful substances such as dioxin by employing ethylene-$\alpha$-olefin rubber instead of a base rubber containing halogen in a large amount, such as chloroprene (refer to the following Patent Literature 1, paragraph [0002] and the like).

Note that, as regards a tire and the like, a reduction in carbon-dioxide emissions required for the production thereof by positively utilizing materials derived from non-petroleum resources has been studied in recent years, as shown in the following Patent 2.
On the other hand, as regards the transmission belt, only a study of using halogen-free materials as described above has been made, and a study for reducing carbon-dioxide emissions has not sufficiently been made.
That is, the transmission belt has a problem that a product fully environmentally-friendly has not been provided conventionally.

CITATION LIST

PATENT LITERATURES

Patent Literature 1:

Japanese Patent Laid-Open No. 2009-156467

Patent Literature 2:

Japanese Patent Laid-Open No. 2003-063206

SUMMARY OF INVENTION

TECHNICAL PROBLEM

An object of the present invention is to solve the problem as described above to provide an environmentally-friendly transmission belt.

SOLUTION TO PROBLEM

In order to solve the above object, the present invention provides a transmission belt formed of a crosslinked rubber, wherein 80% by mass or more of the transmission belt comprises non-petroleum resources, and a base rubber of the crosslinked rubber is a natural rubber.

ADVANTAGES EFFECTS OF INVENTION

According to the present invention, since the base rubber of the crosslinked rubber constituting the transmission belt is a natural rubber, the use of such a transmission belt can suppress environmentally harmful substances such as dioxin from being discharged in the disposal process or the like of the used belt compared with conventional transmission belts in which chloroprene or the like is used as a base rubber.

Moreover, since 80% or more of the total mass of the transmission belt comprises non-petroleum resources, the transmission belt can be produced with low carbon dioxide emissions and can contribute to the reduction in carbon dioxide emissions.

That is, the present invention can provide an environmentally-friendly transmission belt.

BRIEF DESCRIPTION OF DRAWINGS

FIG. 1 is a partial perspective view showing the cross sectional structure of the V belt of one embodiment.
FIG. 2 is a schematic diagram showing the outline of the evaluation method of a belt.

DESCRIPTION OF EMBODIMENTS

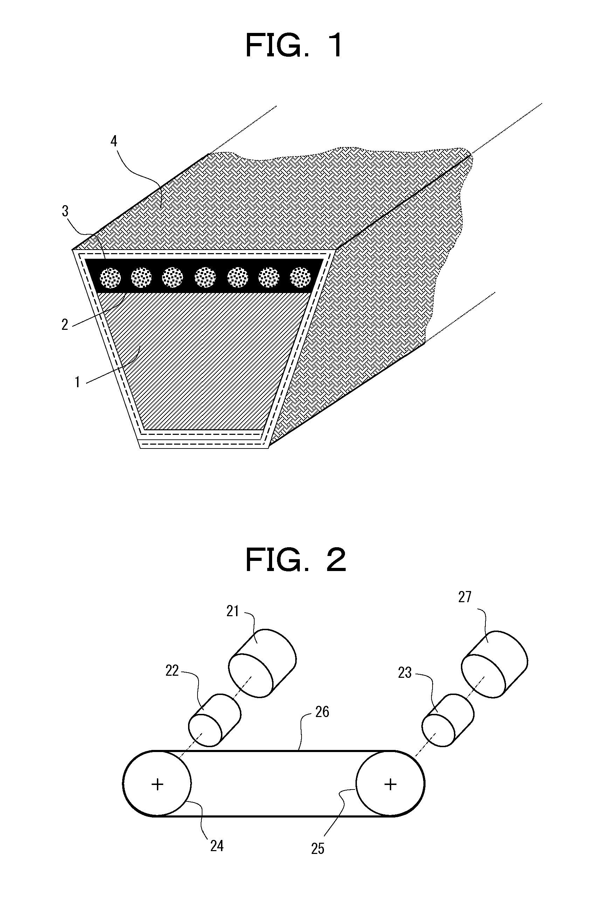

Embodiments of the present invention will be described taking the V belt shown in FIG. 1 as an example.
The V belt of the present embodiment is formed in an endless shape so that it is wound between disk-shaped pulleys provided on the drive side and the driven side to allow power transmission (transmission) to occur, and FIG. 1 is a schematic view showing the state of the cross section when the V belt of the present embodiment is cut by a flat surface orthogonal to the longitudinal direction (peripheral direction) thereof.
The V belt of the present embodiment is used in the state where it is fitted in a groove having a V-shaped cross section (V groove) provided along the outer periphery of the pulley so as to be narrower toward the center of rotation of the pulley, and the V belt is formed so that friction transmission can be performed utilizing a frictional force between the V belt and the inner wall surfaces of the V groove.
Therefore, it has a shape that is narrower toward the inner peripheral side as shown in FIG. 1, and it is formed so that it has a sectional shape of a reverse isosceles trapezoid.
This V belt has a compression rubber layer 1 on the inner peripheral side thereof and further has a bonded rubber layer 2 in contact with the compression rubber layer 1 on the outer periphery side, the compression rubber layer 1 being compressed by the inner wall surfaces of the V groove when the V belt is wound between the pulleys and entered into the bottom of the V groove by the tension applied to the V belt.
Further, the V belt of the present embodiment has a core wire 3 which is embedded in the bonded rubber layer 2 and is imparted with a strength resisting the tension by the core wire 3.
More specifically, in the belt cross section, a plurality of core wires 3 are embedded so that they may be in a state where they are arranged at generally equal intervals in the belt width direction, as shown in FIG. 1.
Note that, although a plurality of the core wires 3 are seen to be embedded in the cross section, actually, one core wire is embedded so as to be spirally wound around the V belt.
Further, the V belt of the present embodiment has a structure where the surface thereof is formed of a rubberized canvas 4, and all of the back side part (outer peripheral side), both lateral sides parts, and front side part (inner peripheral side) are surrounded by the rubberized canvas 4.
That is, the rubberized canvas 4 forms the outer surface of the V belt such that it encloses the compression rubber layer 1 and the bonded rubber layer 2.
Therefore, the V belt according to the present embodiment is formed such that, when it is entered into the V groove, the compression rubber layer 1 can be compressed mainly in the belt width direction, and the repulsive force of the compression can be converted into the frictional force between the outer surface of the rubberized canvas 4 bonded to the lateral side surfaces of the compression rubber layer 1 and the wall surfaces of the V groove to perform friction transmission.
Note that, in the rubberized canvas 4, an uncrosslinked rubber composition is imprinted and coated from both the back and front sides of the canvas to form a state where the coated canvas covers the compression rubber layer 1 and the bonded rubber layer 2, and then the rubber composition is crosslinked to be bonded to the compression rubber layer 1 and the bonded rubber layer 2.
In order to obtain an environmentally-friendly transmission belt, it is important that the proportion of the non-petroleum resources in the total mass of all the materials is 80% or more in the V belt.
Hereinafter, the materials for forming the V belt will be described.

(Rubber Composition)

The crosslinked rubber forming the compression rubber layer 1 and the bonded rubber layer 2 and the crosslinked rubber carried by the canvas in the rubberized canvas 4 are formed from a rubber composition comprising a base rubber, an inorganic filler, an oil, and various rubber chemicals.
Note that it is important that a natural rubber be used as the base rubber.
That is, in conventional transmission belts, a synthetic rubber such as ethylene-α-olefin rubber, chloroprene rubber, styrene butadiene rubber, butadiene rubber, and butyl rubber is used as a rubber component in the materials for forming the conventional transmission belts. However, since materials obtained by the naphtha cracking of crude oil are generally used as the starting materials of these synthetic rubbers, when these synthetic rubbers are utilized as the base rubber, it will be difficult to increase the proportion of the non-petroleum resources in the total mass of all the materials of the V belt to 80% or more. Therefore, it is important to use a natural rubber as the base rubber.
However, these synthetic rubbers can be used in addition to the natural rubber if they are used in a small amount (for example, the total amount of the synthetic rubbers used is 15 parts by mass or less relative to 100 parts by mass of the natural rubber).
The particles of silica, calcium carbonate, montmorillonite, magnesium carbonate, and the like can be employed as the inorganic filler.
The particles of talc, clay, kaolinite, alumina, and mica minerals such as sericite and mica can also be employed as the inorganic filler.
Further, the particles of aluminum hydroxide, magnesium hydroxide, magnesium oxide, titanium oxide, and the like can also be employed as the inorganic filler.
These are used as a rubber reinforcement component; in terms of being excellent in the reinforcing effect, it is preferred to employ any of silica particles, calcium carbonate particles, montmorillonite particles, magnesium carbonate particles, and talc particles, and it is particularly preferred to employ silica particles.
It is also possible to employ the particles obtained by grinding a scallop shell and the shell of a crab as the inorganic filler.
Note that these inorganic fillers are generally obtained from non-petroleum resources.
The blending amount of the inorganic filler in the rubber composition constituting the crosslinked rubber of the compression rubber layer 1, the bonded rubber layer 2, and the rubberized canvas 4 is not particularly limited, but if the blending amount is too small, the reinforcing effect may not sufficiently be exhibited, and if the inorganic filler is excessively mixed, a crack and a chip may be easily generated in the crosslinked rubber.
From such a point of view, the blending amount of the inorganic filler in the rubber composition is generally 30 parts by mass or more and 200 parts by mass or less relative to 100 parts by mass of the natural rubber.
Note that, generally, the particles having an average particle size of about 100 μm or less may be suitably used as the inorganic filler.
Note that, carbon black is generally used as a rubber-reinforcement component, and for example, the carbon black called furnace black or the like is obtained from the soot obtained by incompletely combusting petroleum. Therefore, if such carbon black is used, it will be difficult to increase the proportion of the non-petroleum resources in the total mass of all the materials of the V belt to 80% or more.
However, if carbon black is used in a small amount, the rubber composition may contain carbon black.
However, even in such a case, the content of carbon black is preferably about 10 parts by mass or less, particularly preferably about 5 parts by mass or less, relative to 100 parts by mass of the natural rubber.
Note that the carbon black obtained by carbonizing plants such as soybean and rice bran can be utilized as a material derived from non-petroleum resources.
Further, short fibers and the like are used for the reinforcement of rubber, but synthetic fibers such as polyamide fibers and polyethylene terephthalate (PET) fibers are the materials derived from petroleum resources. Therefore, if short fibers are blended, it is preferred to utilize the fibers derived from non-petroleum resources, for example, fibers such as cotton and wood flour and regenerated fibers such as rayon and acetate.
Furthermore, the rubber composition may contain organic reinforcing agents such as a high styrene resin, a coumarone resin, a phenolic resin, and a melamine resin.
However, since these are also derived from petroleum resources, the blending amount thereof is preferably limited to a small amount.
A process oil used for rubber such as aroma oil, naphthene oil, and paraffin oil can generally be used as the oil. However, since these are derived from petroleum resources, it is important that, even if they are used, they are used in a range where the proportion the non-petroleum resources in the total mass of all the materials of the V belt can be maintained at 80% or more.
The oil derived from non-petroleum resources can also be used instead of the oil derived from petroleum resources, and examples of the oil derived from non-petroleum resources that can be used include vegetable oils and fats such as castor oil, cottonseed oil, linseed oil, rapeseed oil, soybean oil, palm oil, coconut oil, peanut oil, rosin, pineapple oil, pine tar, tall oil, corn oil, rice bran oil, safflower oil, sesame oil, olive oil, sunflower oil, palm kernel oil, camellia oil, jojoba oil, macadamia nuts oil, safflower oil, and tung oil.

Most of the organic compounds included in the rubber chemicals are generally materials derived from petroleum resources, and such materials include various anti-aging agents.

Further, if the rubber is intended to be subjected to organic peroxide crosslinking, the organic peroxide is generally also included in the materials derived from petroleum resources.

Note that stearic acid and zinc oxide are generally treated as materials derived from non-petroleum resources.

Note that, with respect to the rubber composition according to the present embodiment, the crosslinked rubber is preferably formed by sulfur crosslinking (vulcanization), wherein a vulcanization accelerator can be used in combination.

These are generally materials derived from petroleum resources, and examples thereof that can be used include vulcanizing agents such as sulfur, N,N'-m-phenylenedimaleimide, zinc methacrylate, p,p'-dibenzoyl quinonedioxime, poly-p-dinitroso benzene, 4,4'-diphenylmethane bismaleimide, phenylmethane maleimide, 3,3'-dimethyl-5,5'-diethyl-4,4'-diphenylmethane bismaleimide, 4-methyl-1,3-phenylene-bismaleimide, 1,6-bismaleimide-(2,2,4-trimethyl)hexane, p-quinonedioxime, and 4,4'-dithiodimorpholine; and vulcanization accelerators such as aldehyde-ammonia-based, aldehyde amine-based, thiourea-based, guanidinium-based, thiazole-based, sulfenamide-based, thiuram-based, dithiocarbamate-based, and xanthate-based vulcanization accelerators.

Thiuram-based vulcanization accelerators are preferably employed specifically in terms of imparting heat resistance to the crosslinked rubber and being capable of achieving improvement in durability thereof, and especially, it is preferred to employ tetrakis(2-ethylhexyl)thiuram disulfide.

Further, in terms of being capable of imparting adhesive wear resistance, the crosslinked rubber constituting the outer surface of the rubberized canvas 4 preferably contains an inorganic filler derived from non-petroleum resources in a proportion of 30 parts by mass or more and 200 parts by mass or less relative to 100 parts by mass of the natural rubber, and the crosslinked rubber preferably contains, as the inorganic filler, silica particles in a proportion of 5 parts by mass or more, preferably 20 parts by mass or more relative to 100 parts by mass of the natural rubber.

Note that the blending amount of the silica particles is preferably 100 parts by mass or less relative to 100 parts by mass of the natural rubber.

Further, the crosslinked rubber constituting the outer surface of the rubberized canvas 4 preferably contains at least one of calcium carbonate particles and montmorillonite particles in addition to the silica particles as the inorganic filler.

Further, in terms of being capable of imparting heat resistance to the crosslinked rubber forming the rubberized canvas 4, the compression rubber layer 1, and the bonded rubber layer 2 to achieve improvement in durability thereof, the crosslinked rubber preferably contains an anti-aging agent (a material derived from petroleum resources), particularly an amine-based anti-aging agent.

Examples of the amine-based anti-aging agent include N-naphthylamine-based compounds such as N-phenyl-2-naphthylamine and N-phenyl-1-naphthylamine; diphenylamine-based compounds such as 4,4'-bis($\alpha,\alpha$-dimethylbenzyl)diphenylamine, p-(p-toluene sulfonyl amide)-diphenylamine and an alkylated diphenylamine; p-phenylenediamine-based compounds such as N,N'-diphenyl-p-phenylenediamine, N,N'-di-2-naphthyl-p-phenylenediamine, N-phenyl-N'-isopropyl-p-phenylenediamine, N-phenyl-N'-(1,3-dimethylbutyl)-p-phenylenediamine, and N,N'-diphenyl-p-phenylenediamine; and methylquinoline-based compounds such as a 2,2,4-trimethyl-1,2-dihydroquinoline polymer and 6-ethoxy-1,2-dihydro-2,2,4-trimethylquinoline.

Among them, especially, it is particularly preferred to use a p-phenylenediamine-based anti-aging agent and a methylquinoline-based anti-aging agent in combination, in terms of being capable of imparting excellent thermal aging resistance to the crosslinked rubber.

Note that, in terms of being capable of improving the dispersibility of the inorganic filler comprising the silica particles and the like to thereby improve belt strength, the formulation of the rubber composition is preferably adjusted so that a ratio ($\Delta V_2/\Delta V_1$) of a volume change ($\Delta V_2$) after a crosslinked rubber is allowed to be immersed in chloroform at 25°C for 72 hours to a volume change ($\Delta V_1$) after the crosslinked rubber is allowed to be immersed in toluene at 25°C for 72 hours is 1.24 or more.

That is, if an aggregate of the inorganic filler is allowed to be present in the crosslinked rubber, a crack may be generated starting from the aggregate; therefore, it is preferred to increase the polarity of rubber represented by the above ratio to a predetermined value or more.

Note that the upper limit of the ratio ($\Delta V_2/\Delta V_1$) is generally about 1.5.

Examples of the specific methods for adjusting the ratio ($\Delta V_2/\Delta V_1$) include a method of adjusting the blending amount of a vulcanizing agent.

Note that the volume changes ($\Delta V_1$, $\Delta V_2$) can be measured by a method to be described below.

Further, when a crosslinked rubber is formed from such a polar rubber composition, the crosslinked rubber contains silica particles in a proportion of 5 parts by mass or more and 100 parts by mass or less as the inorganic filler relative to 100 parts by mass of the natural rubber, and furthermore the rubber is preferably crosslinked with a crosslinking system of either phenylene-bis-maleimide or phenylene-bis-maleimide and sulfur.

Note that it is preferred that the content of the phenylene-bis-maleimide be generally in a proportion of 3 parts by mass or more and 15 parts by mass or less relative to 100 parts by mass of the natural rubber.

Further, in such a case, the crosslinked rubber preferably contains at least one of calcium carbonate particles and montmorillonite particles as the inorganic filler in addition to the silica particles.

Furthermore, the compression rubber layer 1 particularly tends to generate heat accompanying the elastic deformation such as compression and bending on a pulley, and since the generation of heat, together with frictional heat, causes reduction in the transmission coefficient of power, the compression rubber layer 1 is preferably formed of a crosslinked rubber prepared by crosslinking a rubber composition having a predetermined bound rubber content.

Specifically, the compression rubber layer 1 is preferably formed of a crosslinked rubber which is made from a rubber composition having a bound rubber content of 25% by mass or more and 65% by mass or less (preferably 55% by mass or less) and has a storage modulus at 100°C of 14 MPa or more and 30 MPa or less.

Note that the bound rubber content can be measured by a method to be described later.

Further, the crosslinked rubber for forming the compression rubber layer 1 preferably contains an inorganic filler comprising one or more inorganic particles selected from among silica particles, calcium carbonate particles, montmorillonite particles, magnesium carbonate particles, and talc particles.

Examples of the methods for forming the crosslinked rubber having a storage modulus as described above using the rubber composition having a bound rubber content as described above include a method of adjusting the type, the amount, the particle size, and the like of the inorganic filler to be used; a method of subjecting the inorganic filler to surface treatment; and a method of blending a silane coupling agent and the like with the rubber composition.

Note that the bonded rubber layer 2 is not particularly limited and can be formed from a rubber composition mainly comprising non-petroleum resources, in which a natural rubber is used as the base rubber like in the rubberized canvases 4 and the compression rubber layers 1 as described above.

However, the bonded rubber layer 2 is preferably formed from a rubber composition excellent in adhesiveness with the core wire 3 to be embedded therein.

(Core Wire)

A core wire used for a common V belt can be used as the core wire 3.

However, when a strand made of plastic fibers such as polyamide resin fibers and polyimide resin fibers is used, such fibers will reduce the proportion of non-petroleum resource; therefore, it is preferred to use a strand made of natural fibers. Fibers derived from a plant (plant fibers) can be preferably used as the fibers constituting the core wire.

Examples of the plant fibers include fibers directly collected from plants such as cotton, hemp, and jute, fibers obtained by chemically treating plant-derived cellulose such as rayon and acetate (cellulose fibers), and polylactic acid fibers derived from plant starch; especially, a core wire made of cellulose fibers has high tensile strength and is suitable.

(Canvas)

Note that, similar to the core wire, a canvas made of natural fibers is more suitable also for the canvas constituting the rubberized canvas 4 than that made of plastic fibers, and a canvas made of plant fibers such as cotton is suitable.

Note that, although a V belt is illustrated in the present embodiment, other transmission belts such as a V-ribbed belt, a flat belt, a round belt, and a toothed belt are the same as the V belt as illustrated above in that they can suppress environmentally harmful substances such as dioxin from being discharged by employing a natural rubber as the base rubber, and in that they can contribute to the reduction in carbon dioxide emissions by constituting 80% or more of the total mass thereof with the materials derived from non-petroleum resources, and thus, these transmission belts are also within the scope intended by the present invention.

EXAMPLES

Next, the present invention will be described in more detail by Examples, but the present invention is not limited to these Examples.

(Evaluation Experiment 1)

The formulations having the contents shown in Tables 1 and 2 below were kneaded in a Banbury mixer; after the kneaded materials reached a temperature of 150°C, the kneaded materials were continuously kneaded for 1 min and then sheeted to prepare uncrosslinked sheets; and the sheets were used to prepare V belts each having a peripheral length of about 1 m and having a structure as shown in Table 3.

Note that, the item "Notch" is provided in Table 3, wherein "with notch" means that the belt was formed such that the inner peripheral thereof had a wave shape by providing a plurality of cuts each having a circular shape in a lateral side view of the belt from the inner peripheral side of the belt to the side close to the core wire thereof.

Further, the "$\Delta V_2/\Delta V_1$" in the Tables represents the ratio of the volume change ($\Delta V_2$) after a crosslinked rubber is allowed to be immersed in chloroform at 25°C for 72 hours to the volume change ($\Delta V_1$) after the crosslinked rubber is allowed to be immersed in toluene at 25°C for 72 hours, in the swelling test of rubber based on JIS K 6258.

Note that the volume change was calculated as follows: the mass of the crosslinked rubber before immersion was subtracted from the mass of the crosslinked rubber which was immersed in chloroform or toluene for 72 hours; the difference of the mass of the crosslinked rubber was divided by the specific gravity of chloroform or toluene to calculate the amount of volume increase of the crosslinked rubber in each solvent; the volume of the crosslinked rubber before immersion was determined from the mass and density of the crosslinked rubber; and the amount of volume increase was divided by the volume of the crosslinked rubber before the immersion.

## [Table 1]

| Formulation (parts by mass) | Non-petroleum resources | Formulation A-1 | Formulation A-2 | Formulation A-3 | Formulation A-4 | Formulation A-5 | Formulation A-6 | Formulation A-7 | Formulation A-8 | Formulation A-9 | Formulation A-10 | Formulation A-11 |
|---|---|---|---|---|---|---|---|---|---|---|---|---|
| Natural rubber | O | - | 100 | 100 | 100 | 100 | 100 | 100 | 100 | 100 | 100 | 100 |
| Chloroprene rubber | | 100 | - | - | - | - | - | - | - | - | - | - |
| Silica particles | O | - | - | 80 | 60 | 60 | 60 | 60 | 60 | 40 | 35 | 30 |
| Montmorillonite particles | O | - | - | - | - | - | - | - | - | - | 20 | 30 |
| Calcium carbonate particles | O | - | - | 15 | 15 | 15 | 15 | 15 | 15 | 50 | 65 | 100 |
| Carbon black | | 90 | 90 | 5 | 5 | 5 | 5 | 5 | - | - | - | - |
| Silane coupling agent | | - | - | 6.4 | 4.5 | 4.5 | 4.5 | 4.5 | 4.5 | 3 | 3 | 2.5 |
| Oil | | - | - | - | - | - | - | - | - | - | - | - |
| Stearic acid | O | 1 | 1 | 1 | 1 | 1 | 1 | 1 | 1 | 1 | 1 | 1 |
| Zinc oxide | O | 5 | 5 | 5 | 5 | 5 | 5 | 5 | 5 | 5 | 5 | 5 |
| Magnesium oxide | O | 6 | - | - | - | - | - | - | - | - | - | - |
| Anti-aging agent A | | 1 | 1 | 0.5 | 0.5 | 0.5 | 0.5 | 0.5 | 0.5 | 0.5 | 0.5 | 0.5 |
| Anti-aging agent B | | - | - | 1.5 | 1.5 | 1.5 | 1.5 | 1.5 | 1.5 | 1.5 | 1.5 | 1.5 |
| Anti-aging agent C | | - | - | 0.5 | 0.5 | 0.5 | 0.5 | 0.5 | 0.5 | 0.5 | 0.5 | 0.5 |
| Anti-aging agent D | | - | - | 1 | 1 | 1 | 1 | 1 | 1 | 1 | 1 | 1 |
| Vulcanizing agent A | | - | 2 | 1 | 1 | 1 | 1 | 1 | 1 | 1 | 1 | 1 |
| Vulcanization accelerator A | | - | 2 | 1 | 2 | 2 | 2 | 2 | 2 | 2 | 2 | 2 |
| Vulcanization accelerator B | | - | 2 | 2 | 2 | 2 | 2 | 2 | 2 | 2 | 2 | 2 |
| Vulcanizing agent B | | - | - | - | - | 8 | 15 | 8 | 8 | 8 | 8 | 8 |
| Total (parts by mass) | | 203 | 203 | 219.9 | 199 | 207 | 214 | 207 | 202 | 215.5 | 245.5 | 285 |
| Proportion of materials derived from non-petroleum resources (mass%) | | 5.9 | 52.2 | 91.4 | 91.0 | 87.4 | 84.6 | 87.4 | 89.6 | 91.0 | 92.1 | 93.3 |
| $\Delta V_2/\Delta V_1$ | | - | - | 1.23 | 1.22 | 1.27 | 1.31 | 1.25 | 1.27 | 1.26 | 1.28 | 1.27 |

* Anti-aging agent A: N-phenyl-N'-(1,3-dimethylbutyl)-p-phenylenediamine

* Anti-aging agent B: N-phenyl-N'-isopropyl-p-phenylenediamine

* Anti-aging agent C: 2,2,4-trimethyl-1,2-dihydroquinoline polymer

* Anti-aging agent D: 6-ethoxy-1,2-dihydro-2,2,4-trimethylquinoline

* Vulcanizing agent A: Oil sulfur

* Vulcanization accelerator A: Tetrakis(2-ethylhexyl)thiuram disulfide

* Vulcanization accelerator B: N-cyclohexyl-2-benzothiazolylsulfenamide

* Vulcanizing agent B: m-phenylenedimaleimide

[Table 2]

| Formulation (parts by mass) | Non-petroleum resources | Formulation B-1 | Formulation B-2 | Formulation B-3 | Formulation B-4 | Formulation B-5 | Formulation B-6 |
|---|---|---|---|---|---|---|---|
| Natural rubber | O | - | 100 | 100 | 100 | 100 | 100 |
| Chloroprene rubber | | 100 | - | - | - | - | - |
| Silica particles | O | - | - | 30 | 25 | 25 | 25 |
| Montmorillonite particles | O | - | - | 15 | 15 | 15 | 15 |
| Calcium carbonate particles | O | - | - | - | - | - | 5 |
| Carbon black | | 40 | 40 | 5 | 5 | 5 | - |
| Silane coupling agent | | - | - | 2 | 2 | 2 | 2 |
| Oil | | 10 | 10 | 10 | 10 | 10 | 10 |
| Stearic acid | O | 1 | 1 | 1 | 1 | 1 | 1 |
| Zinc oxide | O | 5 | 5 | 5 | 5 | 5 | 5 |
| Magnesium oxide | O | 6 | - | - | - | - | - |
| Anti-aging agent A | | 1 | 1 | 0.5 | 0.5 | 0.5 | 0.5 |
| Anti-aging agent B | | - | - | 1.5 | 1.5 | 1.5 | 1.5 |
| Anti-aging agent C | | - | - | 0.5 | 0.5 | 0.5 | 0.5 |
| Anti-aging agent D | | - | - | 1 | 1 | 1 | 1 |
| Vulcanizing agent A | | 2 | 2 | 1 | 1 | 1 | 1 |
| Vulcanization accelerator A | | 2 | 2 | 2 | 2 | 2 | 2 |
| Vulcanization accelerator B | | 2 | 2 | 2 | 2 | 2 | 2 |
| Vulcanizing agent B | | - | - | - | - | 3 | 3 |
| Total (parts by mass) | | 169 | 163 | 176.5 | 171.5 | 174.5 | 174.5 |
| Proportion of materials derived from non-petroleum resources (mass%) | | 7.1 | 65.0 | 85.6 | 85.1 | 83.7 | 86.5 |
| $\Delta V_2/\Delta V_1$ | | - | - | 1.22 | 1.23 | 1.25 | 1.26 |

* Anti-aging agent A: N-phenyl-N'-(1,3-dimethylbutyl)-p-phenylenediamine

* Anti-aging agent B: N-phenyl-N'-isopropyl-p-phenylenediamine

* Anti-aging agent C: 2,2,4-trimethyl-1,2-dihydroquinoline polymer

* Anti-aging agent D: 6-ethoxy-1,2-dihydro-2,2,4-trimethylquinoline

* Vulcanizing agent A: Oil sulfur

* Vulcanization accelerator A: Tetrakis(2-ethylhexyl)thiuram disulfide

* Vulcanization accelerator B: N-cyclohexyl-2-benzothiazolylsulfenamide

* Vulcanizing agent B: m-phenylenedimaleimide

[Table 3]

| Materials used | Belt 1 | Belt 2 | Belt 3 | Belt 4 | Belt 5 | Belt 6 | Belt 7 | Belt 8 | Belt 9 | Belt 10 | Belt 11 | Belt 12 | Belt 13 |
|---|---|---|---|---|---|---|---|---|---|---|---|---|---|
| Compression rubber layer | A-1 | A-2 | A-3 | A-4 | A-5 | A-6 | A-7 | A-8 | A-9 | A-10 | A-10 | A-10 | A-11 |
| Bonded rubber layer | A-1 | A-2 | A-3 | A-4 | A-5 | A-6 | A-7 | A-8 | A-9 | A-10 | A-10 | A-10 | A-11 |
| Rubber for canvas | B-1 | B-2 | B-3 | B-4 | B-5 | B-6 | B-6 | B-6 | B-6 | B-6 | B-6 | B-6 | B-6 |
| Canvas | Cotton | Cotton | Cotton | Cotton | Cotton | Cotton | Cotton | Cotton | Cotton | Cotton | Cotton | Cotton | Cotton |
| Core wire | PET | PET | PET | PET | PET | PET | PET | PET | PET | PET | PET | Rayon | Rayon |
| Notch | no | no | no | no | no | no | no | no | no | no | with | with | with |
| Proportion of non-petroleum resources (mass%) | 14 | 56 | 84 | 84 | 81 | 80 | 84 | 85 | 84 | 85 | 85 | 93 | 93 |
| Endurance time (h) | 90 | 40 | 50 | 35 | 85 | 80 | 74 | 85 | 92 | 88 | 120 | 128 | 123 |
| Adhesive wear resistance | ○ | × | × | × | × | ○ | ○ | ○ | ○ | ○ | ◎ | ◎ | ◎ |
| Rubber falling | ○ | × | △ | × | △ | ○ | ○ | ○ | ○ | ○ | ○ | ○ | ○ |

As described above, 80% by mass or more of the constituent materials of the belts 3 to 13 comprises non-petroleum resources, and it can be said that these are environmentally-friendly products compared with the belts 1 and 2. These belts were evaluated in the manner as shown in FIG. 2 (schematic view of the apparatus).
In FIG. 2, reference numeral 21 denotes a motor; reference numerals 22 and 23 each denote a torque detector; reference numerals 24 and 25 each denote a pulley; reference numeral 26 denotes a V belt; and reference numeral 27 denotes a load device.
In the apparatus employed, the mass of the load device 27 was 150 kg, and the outer diameter of the pulleys 24 and 25 was 80 mm.

(Endurance Time)

The running test was performed by setting the load of the load device to 12 ps, under the conditions of an environmental temperature of 90°C and a number of revolutions of 4800 rpm; the apparatus was stopped for every fixed time to visually observe the presence or absence of a crack on the surface of the belt, and the time when the crack was observed was recorded as the endurance time.
Further, when the belt turned sideways or disintegrated, the time was recorded as the endurance time.

(Adhesion Wear Resistance)

The adhesion wear resistance was evaluated as follows: the case where no rubber adhered to the pulleys at all after the belt running test was rated as "◎"; the case where almost no rubber adhered was rated as "○"; the case where rubber slightly adhered was rated as "△"; and the case where a large amount of rubber adhered was rated as "×".

(Rubber Falling)

Further, the scattering situation of rubber powder observed around the apparatus after the running test was observed, and the rubber falling was evaluated as follows: the case where rubber powder was not observed at all was rated as "◎"; the case where the scattering of a small amount of rubber powder was observed was rated as "○"; the case where rubber powder was scattered within a narrow range was rated as "△"; and the case where rubber powder was scattered over a wide range was rated as "×".
The results are shown in Table 3 in combination.

This Table also reveals that the belts 5 to 13, in which the compression rubber layer and the bonded rubber layer are formed by a crosslinked rubber having a ratio ($\Delta V_2/\Delta V_1$) of the volume change ($\Delta V_2$) after a crosslinked rubber is allowed to be immersed in chloroform at 25°C for 72 hours to the volume change ($\Delta V_1$) after the crosslinked belt is allowed to be immersed in toluene at 25°C for 72 hours of 1.24 or more, have long endurance time and provide good results in the evaluation of rubber falling and the like.

(Evaluation Experiment 2)

The rubber compositions were kneaded with the formulations shown in the following Tables 4 and 5; V belts were prepared in the same manner as in the above Evaluation Experiment 1 by the combinations as shown in Table 6; and the endurance time was measured.
However, this evaluation differs from Evaluation Experiment 1 in that, here, the mass of the load device is 100 kg; and pulleys having an outer diameter of 100 mm are used.
In addition, here, the belt surface temperature was measured after the endurance time measurement.
The results are shown in Table 6.

Further, "E'" in Tables 4 and 5 means the storage modulus, which was measured at a temperature condition of 100°C; specifically, it was measured using a viscoelasticity measuring instrument in a tension mode of a frequency of 10 Hz and a distortion of 1.0%.
Furthermore, the bound rubber content was determined as follows.
First, about 0.2 g of cut samples obtained by cutting the rubber compositions before crosslinking into about 1 mm square was precisely weighed, and at the same time, a 100-mesh wire net basket for storing the cut samples was precisely weighed.
Next, the cut samples were stored in the wire net basket, which was put into a 200-ml glass bottle in which toluene was stored, thus immersing the wire net basket in the toluene.
The glass bottle was allowed to stand in a temperature environment of 25°C for 72 hours, followed by taking out the wire net basket, which was dried in a dryer for 24 hours to measure the mass thereof.

The mass of the wire net basket which had been previously precisely weighed was subtracted from the mass obtained to determine the mass of the sample which remained undissolved after the test.

The bound rubber content (BR) was calculated based on the following formula:

$$\mathrm{BR\ (mass\%)} = [A - (B \times C/D)]/(B \times E/D) \times 100\ (\%),$$

wherein A represents the mass of the sample after the test; B represents the mass of the initial cut sample; C represents the total parts of components insoluble in toluene; D represents the total parts of the formulation; and E represents the parts of rubber blended.

[Table 4]

| Formulation (parts by mass) | Non-petroleum resources | Formulation C-1 | Formulation C-2 | Formulation C-3 | Formulation C-4 | Formulation C-5 | Formulation C-6 | Formulation C-7 | Formulation C-8 | Formulation C-9 |
|---|---|---|---|---|---|---|---|---|---|---|
| Natural rubber | ○ | - | 100 | 100 | 100 | 100 | 100 | 100 | 100 | 100 |
| Chloroprene rubber | | 100 | - | - | - | - | - | - | - | - |
| Silica particles | ○ | - | - | - | 85 | 60 | 60 | 45 | 40 | 40 |
| Montmorillonite particles | ○ | - | - | - | - | - | - | - | - | - |
| Calcium carbonate particles | ○ | - | - | 120 | 15 | 15 | 15 | 50 | 50 | 50 |
| Magnesium carbonate particles | ○ | - | - | 50 | - | - | - | - | 30 | - |
| Talc particles | ○ | - | - | - | - | - | - | - | - | 30 |
| Carbon black | | 90 | 90 | 20 | 5 | 5 | - | - | - | - |
| Silane coupling agent | | - | - | - | 6.4 | 4.5 | 4.5 | 3 | 3 | 3 |
| Oil | | - | - | - | - | - | - | - | - | - |
| Stearic acid | ○ | 1 | 1 | 1 | 1 | 1 | 1 | 1 | 1 | 1 |
| Zinc oxide | ○ | 5 | 5 | 5 | 5 | 5 | 5 | 5 | 5 | 5 |
| Magnesium oxide | ○ | 6 | - | - | - | - | - | - | - | - |
| Anti-aging agent A | | 1 | 1 | 1 | 0.5 | 0.5 | 0.5 | 0.5 | 0.5 | 0.5 |
| Anti-aging agent B | | - | 1.5 | 1.5 | 1.5 | 1.5 | 1.5 | 1.5 | 1.5 | 1.5 |
| Anti-aging agent C | | - | 0.5 | 0.5 | 0.5 | 0.5 | 0.5 | 0.5 | 0.5 | 0.5 |
| Anti-aging agent D | | - | - | - | 1 | 1 | 1 | 1 | 1 | 1 |
| Vulcanizing agent A | | - | 2 | 2 | 1 | 1 | 1 | 1 | 1 | 1 |
| Vulcanization accelerator A | | - | 2 | 2 | 1 | 2 | 2 | 2 | 2 | 2 |
| Vulcanization accelerator B | | - | 2 | 2 | 2 | 2 | 2 | 2 | 2 | 2 |
| Vulcanizing agent B | | - | - | - | - | 8 | 8 | 8 | 8 | 8 |
| Total (parts by mass) | | 203 | 205 | 305 | 224.9 | 207 | 202 | 220.5 | 245.5 | 245.5 |
| Proportion of materials derived from non-petroleum resources (mass%) | | 5.9 | 51.7 | 90.5 | 91.6 | 87.4 | 89.6 | 91.2 | 92.1 | 92.1 |
| E' (MPa) | | 19 | 18 | 12 | 23 | 22 | 21 | 19 | 18 | 17 |
| Bound rubber (mass%) | | - | 70 | 20 | 65 | 55 | 52 | 34 | 27 | 26 |

\* Anti-aging agent A: N-phenyl-N'-(1,3-dimethylbutyl)-p-phenylenediamine

\* Anti-aging agent B: N-phenyl-N'-isopropyl-p-phenylenediamine

\* Anti-aging agent C: 2,2,4-trimethyl-1,2-dihydroquinoline polymer

\* Anti-aging agent D: 6-ethoxy-1,2-dihydro-2,2,4-trimethylquinoline

\* Vulcanizing agent A: Oil sulfur

* Vulcanization accelerator A: Tetrakis(2-ethylhexyl)thiuram disulfide

* Vulcanization accelerator B: N-cyclohexyl-2-benzothiazolylsulfenamide

* Vulcanizing agent B: m-phenylenedimaleimide

[Table 5]

| Formulation (parts by mass) | Non-petroleum resources | Formulation D-1 | Formulation D-2 | Formulation D-3 |
|---|---|---|---|---|
| Natural rubber | ○ | - | 100 | 100 |
| Chloroprene rubber | | 100 | - | - |
| Silica particles | ○ | - | - | 30 |
| Montmorillonite particles | ○ | - | - | 15 |
| Calcium carbonate particles | ○ | - | - | - |
| Magnesium carbonate particles | ○ | - | - | - |
| Talc particles | ○ | - | - | - |
| Carbon black | | 40 | 40 | 5 |
| Silane coupling agent | | - | - | 2 |
| Oil | | 10 | 10 | 10 |
| Stearic acid | ○ | 1 | 1 | 1 |
| Zinc oxide | ○ | 5 | 5 | 5 |
| Magnesium oxide | ○ | 6 | - | - |
| Anti-aging agent A | | 1 | 1 | 0.5 |
| Anti-aging agent B | | - | 1.5 | 1.5 |
| Anti-aging agent C | | - | 0.5 | 0.5 |
| Anti-aging agent D | | - | - | 1 |
| Vulcanizing agent A | | - | 2 | 1 |
| Vulcanization accelerator A | | - | 2 | 2 |
| Vulcanization accelerator B | | - | 2 | 2 |
| Vulcanizing agent B | | - | - | 3 |
| Total (parts by mass) | | 163 | 165 | 179.5 |
| Proportion of materials derived from non-petroleum resources (mass%) | | 7.4 | 64.2 | 84.1 |
| E' (MPa) | | 5 | 3 | 5 |
| Bound rubber (mass%) | | - | 36 | 20 |

* Anti-aging agent A: N-phenyl-N'-(1,3-dimethylbutyl)-p-phenylenediamine

\* Anti-aging agent B: N-phenyl-N'-isopropyl-p-phenylenediamine

\* Anti-aging agent C: 2,2,4-trimethyl-1,2-dihydroquinoline polymer

\* Anti-aging agent D: 6-ethoxy-1,2-dihydro-2,2,4-trimethylquinoline

\* Vulcanizing agent A: Oil sulfur

\* Vulcanization accelerator A: Tetrakis(2-ethylhexyl)thiuram disulfide

\* Vulcanization accelerator B: N-cyclohexyl-2-benzothiazolylsulfenamide

\* Vulcanizing agent B: m-phenylenedimaleimide

[Table 6]

| Materials used | Belt 14 | Belt 15 | Belt 16 | Belt 17 | Belt 18 | Belt 19 | Belt 20 | Belt 21 | Belt 22 | Belt 23 | Belt 24 |
|---|---|---|---|---|---|---|---|---|---|---|---|
| Compression rubber layer | C-1 | C-2 | C-3 | C-4 | C-5 | C-6 | C-7 | C-8 | C-9 | C-9 | C-9 |
| Bonded rubber layer | C-1 | C-2 | C-3 | C-4 | C-5 | C-6 | C-7 | C-8 | C-9 | C-9 | C-9 |
| Rubber for canvas | D-1 | D-2 | D-2 | D-3 | D-3 | D-3 | D-3 | D-3 | D-3 | D-3 | D-3 |
| Canvas | Cotton | Cotton | Cotton | Cotton | Cotton | Cotton | Cotton | Cotton | Cotton | Cotton | Cotton |
| Core wire | PET | PET | PET | PET | PET | PET | PET | PET | PET | PET | Rayon |
| Notch | no | no | no | no | no | no | no | no | no | with | with |
| Proportion of non-petroleum resources (mass%) | 14 | 56 | 70 | 84 | 81 | 82 | 84 | 84 | 84 | 84 | 92 |
| Endurance time (hr) | 170 | 120 | 100 | 160 | 185 | 188 | 180 | 175 | 177 | 230 | 210 |
| Belt temperature (°C) | 110 | 115 | 116 | 108 | 96 | 94 | 93 | 96 | 93 | 90 | 90 |

As described above, 80% by mass or more of the constituent materials of the belts 17 to 24 comprises non-petroleum resources, and it can be said that these are environmentally-friendly products compared with the belts 14 to 16. Further, as shown also in the above Table 6, when the compression rubber layer is formed of a crosslinked rubber which is made from a rubber composition having a bound rubber content of 25% by mass or more and 65% by mass or less, and the storage modulus at 100°C of the crosslinked rubber is 14 MPa or more and 30 MPa or less (Formulations C-4 to C-9), the belt surface temperature after measuring the endurance time is a temperature close to 90°C which is the test environment temperature, and it is found that the generation of heat hardly occurs, and the transmission loss of power is suppressed.

(Evaluation Experiment 3)

The rubber compositions were kneaded with the formulations shown in Tables 7 and 8 below; V belts were prepared in the same manner as in the above Evaluation Experiment 1 using the combinations as shown in Table 9; and the endurance time, adhesive wear, and rubber falling were evaluated.
However, this evaluation differs from Evaluation Experiment 1 in that, here, the mass of the load device is 100 kg; and pulleys having an outer diameter of 100 mm are used.
The results are shown in Table 9.
[Table 7]

| Formulation (parts by mass) | Non-petroleum resources | Formulation E-1 | Formulation E-2 | Formulation E-3 | Formulation E-4 | Formulation E-5 | Formulation E-6 | Formulation E-7 | Formulation E-8 | Formulation E-9 |
|---|---|---|---|---|---|---|---|---|---|---|
| Natural rubber | O | - | 100 | 100 | 100 | 100 | 100 | 100 | 100 | 100 |
| Chloroprene rubber | | 100 | - | - | - | - | - | - | - | - |
| Silica particles | O | - | - | 80 | 80 | 80 | 80 | 90 | 50 | 50 |
| Montmorillonite particles | O | - | - | - | | | | | 30 | 30 |
| Calcium carbonate particles | O | - | - | - | - | - | - | - | 10 | 100 |
| Carbon black | | 90 | 90 | 10 | 10 | 10 | 10 | - | - | - |
| Silane coupling agent | | - | - | 6.5 | 6.5 | 6.5 | 6.5 | 7 | 4 | 4 |
| Oil | | 5 | 5 | 5 | 5 | 5 | 5 | 5 | 5 | 5 |
| Stearic acid | O | 1 | 1 | 1 | 1 | 1 | 1 | 1 | 1 | 1 |
| Zinc oxide | O | 5 | 5 | 5 | 5 | 5 | 5 | 5 | 5 | 5 |
| Magnesium oxide | O | 6 | - | - | - | - | - | - | - | - |
| Anti-aging agent A | | 1 | 1 | 1 | 0.5 | 0.5 | 0.5 | 0.5 | 0.5 | 0.5 |
| Anti-aging agent B | | - | - | - | 1.5 | 1.5 | 1.5 | 1.5 | 1.5 | 1.5 |
| Anti-aging agent C | | - | - | - | 0.5 | 0.5 | 0.5 | 0.5 | 0.5 | 0.5 |
| Anti-aging agent D | | - | - | - | 1 | 1 | 1 | 1 | 1 | 1 |
| Vulcanizing agent A | | - | 2 | 2 | 2 | 1 | 1 | 1 | 1 | 1 |
| Vulcanization accelerator A | | - | 2 | 1 | 2 | 2 | - | 2 | 2 | 2 |
| Vulcanization accelerator B | | - | 2 | 2 | 2 | 2 | 2 | 2 | 2 | 2 |
| Vulcanization accelerator C | | - | - | - | - | - | 2 | - | - | - |
| Total (parts by mass) | | 208 | 208 | 213.5 | 217 | 216 | 216 | 216.5 | 213.5 | 303.5 |
| Proportion of materials derived from non-petroleum resources (mass%) | | 5.8 | 51.0 | 87.1 | 85.7 | 86.1 | 86.1 | 90.5 | 91.8 | 94.2 |

* Anti-aging agent A: N-phenyl-N'-(1,3-dimethylbutyl)-p-phenylenediamine

* Anti-aging agent B: N-phenyl-N'-isopropyl-p-phenylenediamine

* Anti-aging agent C: 2,2,4-trimethyl-1,2-dihydroquinoline polymer

* Anti-aging agent D: 6-ethoxy-1,2-dihydro-2,2,4-trimethylquinoline

* Vulcanizing agent A: Oil sulfur

* Vulcanization accelerator A: Tetrakis(2-ethylhexyl)thiuram disulfide

* Vulcanization accelerator B: N-cyclohexyl-2-benzothiazolylsulfenamide

* Vulcanizing accelerator C: Tetraethylthiuram sulfide

[Table 8]

| Formulation (parts by mass) | Non-petroleum resources | Formulation F-1 | Formulation F-2 | Formulation F-3 | Formulation F-4 | Formulation F-5 | Formulation F-6 | Formulation F-7 | Formulation F-8 |
|---|---|---|---|---|---|---|---|---|---|
| Natural rubber | ○ | - | 100 | 100 | 100 | 100 | 100 | 100 | 100 |
| Chloroprene rubber | | 100 | - | - | - | - | - | - | - |
| Silica particles | ○ | - | - | 30 | 30 | 30 | 30 | 40 | 30 |
| Montmorillonite particles | ○ | - | - | - | | | | | 10 |
| Calcium carbonate particles | ○ | - | - | - | - | - | - | - | 5 |
| Carbon black | | 40 | 40 | 10 | 10 | 10 | 10 | - | - |
| Silane coupling agent | | - | - | 2.5 | 2.5 | 2.5 | 2.5 | 3 | 2.5 |
| Oil | | 10 | 10 | 10 | 10 | 10 | 10 | 10 | 10 |
| Stearic acid | ○ | 1 | 1 | 1 | 1 | 1 | 1 | 1 | 1 |
| Zinc oxide | ○ | 5 | 5 | 5 | 5 | 5 | 5 | 5 | 5 |
| Magnesium oxide | ○ | 6 | - | - | - | - | - | - | - |
| Anti-aging agent A | | 1 | 1 | 1 | 0.5 | 0.5 | 0.5 | 0.5 | 0.5 |
| Anti-aging agent B | | - | - | - | 1.5 | 1.5 | 1.5 | 1.5 | 1.5 |
| Anti-aging agent C | | - | - | - | 0.5 | 0.5 | 0.5 | 0.5 | 0.5 |
| Anti-aging agent D | | - | - | - | 1 | 1 | 1 | 1 | 1 |
| Vulcanizing agent A | | - | 2 | 2 | 2 | 1 | 1 | 1 | 1 |
| Vulcanization accelerator A | | - | 2 | 2 | 2 | 2 | - | 2 | 2 |
| Vulcanization accelerator B | | - | 2 | 2 | 2 | 2 | 2 | 2 | 2 |
| Vulcanization accelerator C | | - | - | - | - | - | 2 | - | - |
| Total (parts by mass) | | 163 | 163 | 165.5 | 168 | 167 | 167 | 167.5 | 172 |
| Proportion of materials derived from non-petroleum resources (mass%) | | 7.4 | 65.0 | 82.2 | 81.0 | 81.4 | 81.4 | 87.2 | 87.8 |

* Anti-aging agent A: N-phenyl-N'-(1,3-dimethylbutyl)-p-phenylenediamine

* Anti-aging agent B: N-phenyl-N'-isopropyl-p-phenylenediamine

* Anti-aging agent C: 2,2,4-trimethyl-1,2-dihydroquinoline polymer

* Anti-aging agent D: 6-ethoxy-1,2-dihydro-2,2,4-trimethylquinoline

* Vulcanizing agent A: Oil sulfur

* Vulcanization accelerator A: Tetrakis(2-ethylhexyl)thiuram disulfide

* Vulcanization accelerator B: N-cyclohexyl-2-benzothiazolylsulfenamide

* Vulcanizing accelerator C: Tetraethylthiuram sulfide

[Table 9]

| Materials used | Belt 25 | Belt 26 | Belt 27 | Belt 28 | Belt 29 | Belt 30 | Belt 31 | Belt 32 | Belt 33 | Belt 34 | Belt 35 |
|---|---|---|---|---|---|---|---|---|---|---|---|
| Compression rubber layer | E-1 | E-2 | E-3 | E-4 | E-5 | E-6 | E-7 | E-8 | E-8 | E-8 | E-9 |
| Bonded rubber layer | E-1 | E-2 | E-3 | E-4 | E-5 | E-6 | E-7 | E-8 | E-8 | E-8 | E-9 |
| Rubber for canvas | F-1 | F-2 | F-3 | F-4 | F-5 | F-6 | F-7 | F-8 | F-8 | F-8 | F-8 |
| Canvas | Cotton | Cotton | Cotton | Cotton | Cotton | Cotton | Cotton | Cotton | Cotton | Cotton | Cotton |
| Core wire | PET | PET | PET | PET | PET | PET | PET | PET | PET | Rayon | Rayon |
| Notch | no | no | no | no | no | no | no | no | with | with | with |
| Proportion of non-petroleum resources (mass%) | 14 | 55 | 80 | 80 | 80 | 80 | 84 | 84 | 84 | 92 | 93 |
| Endurance time (h) | 170 | 100 | 120 | 140 | 165 | 145 | 170 | 175 | 190 | 195 | 185 |
| Adhesive wear | ○ | × | × | × | × | × | ○ | ○ | ◎ | ◎ | ◎ |
| Rubber falling | ○ | △ | △ | △ | △ | △ | △ | ○ | ○ | ○ | ○ |

As described above, 80% by mass or more of the constituent materials of the belts 27 to 35 comprises non-petroleum resources, and it can be said that these are environmentally-friendly products compared with the belts 25 and 26. Further, as shown in the above Table 9, when the rubber for canvas constituting a surface which is brought into contact with a pulley is formed from the formulations F-3 to F-8 containing silica particles in a proportion of 20 parts by mass or more relative to 100 parts by mass of a natural rubber, it is found that "rubber falling" is remedied compared with the case where the formulation F-2 which does not contain the silica particles is employed.

Furthermore, when the case where only a p-phenylenediamine-based anti-aging agent is used as the anti-aging agent (Formulation E-3) is compared with the case where a p-phenylenediamine-based anti-aging agent and a methylquinoline-based anti-aging agent are used in combination (Formulation E-4), it is found that the latter is superior in endurance time.

From the results as described above, it is possible to understand that the present invention can provide an environmentally-friendly transmission belt, and moreover can provide a transmission belt excellent in strength, wear resistance, and mechanical efficiency of power transmission by properly adjusting the formulation.

REFERENCE SIGNS LIST

1: Compression Rubber Layer, 2: Bonded Rubber Layer, 3: Core Wire, 4: Rubberized Canvas

**Claims**

1. A transmission belt formed of a crosslinked rubber, wherein 80% by mass or more of the transmission belt comprises non-petroleum resources, and a base rubber of the crosslinked rubber is a natural rubber.

2. The transmission belt according to claim 1, wherein the crosslinked rubber has a ratio ($\Delta V_2/\Delta V_1$) of a volume change ($\Delta V_2$) after the crosslinked rubber is allowed to be immersed in chloroform at 25°C for 72 hours to a volume change ($\Delta V_1$) after the crosslinked rubber is allowed to be immersed in toluene at 25°C for 72 hours of 1.24 or more, and wherein the crosslinked rubber contains an inorganic filler from non-petroleum resources in a proportion of 30 parts by mass or more and 200 parts by mass or less relative to 100 parts by mass of the natural rubber.

3. The transmission belt according to claim 1 or 2, wherein the crosslinked rubber contains silica particles in a proportion of 5 parts by mass or more and 100 parts by mass or less as the inorganic filler relative to 100 parts by mass of the natural rubber, and the crosslinked rubber further contains phenylene-bis-maleimide in a proportion of 3 parts by mass or more and 15 parts by mass or less relative to 100 parts by mass of the natural rubber.

4. The transmission belt according to claim 3, wherein the crosslinked rubber contains at least one of calcium carbonate particles and montmorillonite particles as the inorganic filler in addition to the silica particles.

5. The transmission belt according to any one of claims 1 to 4, wherein the transmission belt is a V belt in which at least a back side part thereof is formed of a rubberized canvas and a canvas forming the rubberized canvas is made of plant fibers.

6. The transmission belt according to claim 5, wherein a core wire is embedded in the V belt so that the core wire extends in a longitudinal direction of the belt and the core wire is made of cellulose fibers.

7. The transmission belt according to claim 1, wherein the transmission belt is a V belt having a compression rubber layer, the compression rubber layer is formed of a crosslinked rubber which is made from a rubber composition having a bound rubber content of 25% by mass or more and 65% by mass or less, the crosslinked rubber has a storage modulus at 100°C of 14 MPa or more and 30 MPa or less, and the crosslinked rubber contains an inorganic filler from non-petroleum resources in a proportion of 30 parts by mass or more and 200 parts by mass or less relative to 100 parts by mass of the natural rubber.

8. The transmission belt according to claim 7, wherein the crosslinked rubber contains one or more of silica particles, calcium carbonate particles, montmorillonite particles, magnesium carbonate particles, and talc particles as the inorganic filler.

9. The transmission belt according to claim 7 or 8, wherein at least a back side part of the transmission belt is formed of a rubberized canvas and a canvas forming the rubberized canvas is made of plant fibers.

**10.** The transmission belt according to any one of claims 7 to 9, wherein a core wire is embedded in the V belt so that the core wire extends in a longitudinal direction of the belt and the core wire is made of cellulose fibers.

**11.** The transmission belt according to claim 1, wherein the crosslinked rubber forming a surface which is brought into contact with at least a pulley contains an inorganic filler from non-petroleum resourcess in a proportion of 30 parts by mass or more and 200 parts by mass or less relative to 100 parts by mass of the natural rubber and the crosslinked rubber contains silica particles in a proportion of 20 parts by mass or more as the inorganic filler relative to 100 parts by mass of the natural rubber.

**12.** The transmission belt according to claim 11, wherein the crosslinked rubber contains at least one of calcium carbonate particles and montmorillonite particles in addition to the silica particles as the inorganic filler.

**13.** The transmission belt according to claim 11 or 12, wherein the crosslinked rubber further contains a p-phenylenediamine-based anti-aging agent and a methylquinoline-based anti-aging agent.

**14.** The transmission belt according to any one of claims 11 to 13, wherein the crosslinked rubber contains a vulcanization accelerator and the vulcanization accelerator is tetrakis(2-ethylhexyl)thiuram disulfide.

**15.** The transmission belt according to any one of claims 11 to 14, wherein the transmission belt is a V belt in which at least a back side part thereof is formed of a rubberized canvas and a canvas forming the rubberized canvas is made of plant fibers.

**16.** The transmission belt according to any one of claims 11 to 15, wherein a core wire is embedded so that the core wire extends in a longitudinal direction of the belt and the core wire is made of cellulose fibers.

# FIG. 1

# FIG. 2

## INTERNATIONAL SEARCH REPORT

International application No.

PCT/JP2011/061260

### A. CLASSIFICATION OF SUBJECT MATTER
*F16G1/08*(2006.01)i, *F16G5/06*(2006.01)i

According to International Patent Classification (IPC) or to both national classification and IPC

### B. FIELDS SEARCHED

Minimum documentation searched (classification system followed by classification symbols)
F16G1/00-1/28, F16G5/00-5/24

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2008-101728 A (Mitsuboshi Belting Ltd.), 01 May 2008 (01.05.2008), paragraphs [0016] to [0032] (Family: none) | 1,3-6,11-16 |
| Y | JP 2008-274065 A (Mitsuboshi Belting Ltd.), 13 November 2008 (13.11.2008), paragraphs [0007], [0020] to [0021] (Family: none) | 1,3-6,11-16 |
| Y | JP 2008-44574 A (Sumitomo Rubber Industries, Ltd.), 28 February 2008 (28.02.2008), paragraphs [0002] to [0004] (Family: none) | 1,3-6,11-16 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 August, 2011 (01.08.11) | 09 August, 2011 (09.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/061260

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2009/101799 A1  (Bando Chemical Industries, Ltd.),<br>20 August 2009 (20.08.2009),<br>paragraph [0024]<br>& US 2010/0331129 A1 | 5-6,15-16 |
| Y | JP 10-148238 A  (The Gates Corp.),<br>02 June 1998 (02.06.1998),<br>paragraph [0008]<br>& US 5807194 A          & EP 0841500 A2 | 6,16 |
| Y | JP 2000-26674 A  (HUTCHINSON une S.A.),<br>25 January 2000 (25.01.2000),<br>paragraph [0011]<br>& US 6251977 B1          & EP 0964030 A1<br>& FR 2779731 A1 | 13-16 |
| Y | JP 2002-213537 A  (The Goodyear Tire & Rubber Co.),<br>31 July 2002 (31.07.2002),<br>paragraphs [0033] to [0034]<br>& US 2002/0128105 A1     & EP 1217254 A2 | 13-16 |
| Y | JP 2009-24757 A  (Bando Chemical Industries, Ltd.),<br>05 February 2009 (05.02.2009),<br>paragraph [0039]<br>(Family: none) | 14-16 |
| A | JP 2010-37679 A  (Unitika Ltd.),<br>18 February 2010 (18.02.2010),<br>paragraphs [0002] to [0009]<br>(Family: none) | 1-16 |
| A | JP 2009-41768 A  (Mitsuboshi Belting Ltd.),<br>26 February 2009 (26.02.2009),<br>paragraphs [0023] to [0033]<br>(Family: none) | 1-16 |

Form PCT/ISA/210 (continuation of second sheet) (July 2009)

**EP 2 584 217 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009156467 A

- JP 2003063206 A